# EUROPÄISCHE PATENTSCHRIFT

(11) **EP 3 255 419 B1**
(45) Veröffentlichungstag und Bekanntmachung des Hinweises auf die Patenterteilung: **03.10.2018**
(21) Anmeldenummer: 17174152.3
(22) Anmeldetag: 02.06.2017
(51) Int. Cl.: G01N 23/20016, G01N 23/2209, G01N 23/207

(54) **MESSKAMMER FÜR EIN KOMPAKTES GONIOMETER IN EINEM RÖNTGENSPEKTROMETER**
MEASUREMENT CELL FOR A COMPACT GONIOMETER IN AN X-RAY SPECTROMETER
CHAMBRE DE MESURE POUR UN GONIOMÈTRE COMPACT DANS UN SPECTROMÈTRE À RAYONS X

(30) Priorität: 10.06.2016 DE 102016210304
(43) Veröffentlichungstag der Anmeldung: 13.12.2017
(73) Patentinhaber: Bruker AXS GmbH, 76187 Karlsruhe (DE)
(72) Erfinder: Hammerschmid, Gerhard, 76187 Karlsruhe (DE); Benz, Carolin, 76316 Malsch (DE); Filsinger, Frank, Karlsruhe (DE)
(74) Vertreter: Kohler Schmid Möbus Patentanwälte

(56) Entgegenhaltungen:
- EP-A1- 0 597 668
- EP-A2- 0 955 539
- WO-A1-91/08471
- JP-A- 2002 311 199
- GOHSHI Y ET AL: "Wide Range Two-crystal Vacuum X-ray Spectrometer for Chemical State Analysis", APPLIED SPECTROSCOPY,, Bd. 35, Nr. 2, 1. März 1982 (1982-03-01), Seiten 171-174, XP001413610,

## Beschreibung

Die Erfindung betrifft eine Messkammer für ein Röntgenspektrometer mit einem Goniometer zur Analyse von Röntgenfluoreszenzstrahlung, die von einer mit Röntgenstrahlung bestrahlten, zu untersuchenden Messprobe ausgeht, umfassend eine Eintrittsöffnung zum Eintritt der Röntgenfluoreszenzstrahlung in die Messkammer, einen ersten Goniometerarm zur Halterung und Justierung eines Analysatorkristalls, und einen zweiten Goniometerarm zur Halterung und Justierung eines Röntgen-Detektors, wobei die Messkammer vakuumdicht ausgestaltet ist und wobei die Eintrittsöffnung für die Röntgenfluoreszenzstrahlung durch ein Fenster vakuumdicht verschlossen ist.

Ein Röntgenspektrometer sowie eine Messkammer mit diesen Merkmalen sind bekannt aus "The Rigaku Journal, Vol.16, number 2/ 1999".

EP0955539 A2 offenbart eine Messkammer zur Verwendung in einem Röntgenspektrometer mit einem Goniometer zur Analyse von Röntgenfluoreszenzstrahlung, die von einer mit Röntgenstrahlung bestrahlten, zu untersuchenden Messprobe ausgeht, umfassend eine Eintrittsöffnung zum Eintritt der Röntgenfluoreszenzstrahlung in die Messkammer, einen ersten Goniometerarm zur Halterung und Justierung eines Analysatorkristalls, und einen zweiten Goniometerarm zur Halterung und Justierung eines Röntgen-Detektors, wobei die Messkammer vakuumdicht ausgestaltet ist und wobei die Eintrittsöffnung für die Röntgenfluoreszenzstrahlung durch ein Fenster vakuumdicht verschlossen ist.

Röntgenspektromter sind zudem aus EP0597668 A1, WO91/08471 A1 und GOHSHI Y ET AL: "Wide Range Two-crystal Vacuum X-ray Spectrometer for Chemical State Analysis", APPLIED SPECTROSCOPY, Bd. 35, Nr. 2, 1. März 1982, Seiten 171-174, bekannt.

### Hintergrund der Erfindung

Die Röntgenfluoreszenzanalyse (RFA) ist ein leistungsfähiges Verfahren der instrumentellen Analytik zur Detektion und Charakterisierung verschiedenster Materialien.. Je nach analytischer Aufgabenstellung kommen verschiedene Varianten der RFA zum Einsatz, die sich in der Messgeometrie unterscheiden.

Eine wichtige und sehr häufig eingesetzte Variante ist die wellenlängendispersive RFA welche die Bragg-Bedingung zur Analyse der Röntgenstrahlung ausnutzt.

Die Bragg-Bedingung ist ein physikalisches Grundgesetz, welches zur Messung der Photonenenergie von Röntgenstrahlung angewendet wird. Wird solche Strahlung an einem Kristallgitter gebeugt, dann gilt der folgende Zusammenhang zwischen Kristall- und Strahlungsparametern: *λ* = 2*d*·sin*ϑ*
- λ:: Wellenlänge der Strahlung
- 2d-Wert:: Netzebenenabstand des Kristalls (Eigenschaft der Gitterstruktur)
- ϑ:: Winkel des Reflexes zur Kristallgitterebene
Röntgenspektrometer für die wellenlängendispersive RFA weisen hierbei in der Regel eine Messkammer mit einem Goniometer auf.

Goniometer nach dem Stand der Technik erfordern eine aufeinander abgestimmte Drehbewegung zweier koaxialer Achsen, nämlich für einen Kristall und für eine Detektoreinheit, damit zwischen dem aktiven Kristall (bzw. einem Multilayer) und dem Detektorsystem die Bragg-Bedingung reproduzierbar erfüllt wird. Um verschiedene Wellenlängenbereiche analysieren zu können, werden in derartigen Aufbauten auch Kristallwechsler mit einer Mehrzahl von Kristallen verwendet, die motorisch oder manuell so verstellbar sind, dass sie in eine Arbeitsposition einstellbar sind.

Wichtige Randbedingungen sind dabei folgende:
Es wird eine hohe Genauigkeit gefordert. Das betrifft besonders die Winkelstellung beider Drehachsen der Arme des Goniometers zueinander und die räumliche Lage der Drehachsen relativ zu den Röntgen-optischen Komponenten, wie beispielsweise Masken und Kollimatoren, aber etwa auch relativ zur Kristalloberfläche.

Die Auswirkungen von Verformungen der Messkammer, welche nach Evakuierung durch die Druckdifferenz zwischen dem schwankendem Atmosphärendruck und dem Vakuum in der Messkammer belastet wird, auf die Geometrie des Strahlengangs müssen konstruktiv begrenzt werden.

Besonders wichtig hinsichtlich einer Miniaturisierung der Gesamtgeräte ist eine leichte kompakte, aber dennoch verwindungssteife Bauweise.

Thermische Einträge des Goniometeraufbaus und Temperaturschwankungen in der Messkammer sollten so gering wie möglich sein. Dies hat beispielsweise negative Auswirkungen auf den Analysatorkristall Ein wichtiger Analysatorkristall besteht aus dem Material Pentaerythritol (PET), welches einen sehr starken Wärmeausdehnungs-koeffizienten aufweist. Bei Temperaturschwankungen verändert sich der 2d-Wert der Kristallstruktur entsprechend stark, wodurch sich auch der Reflexionswinkel ϑ für Röntgenstrahlung einer Wellenlänge A entsprechend verändert. Starke Temperaturschwankungen führen daher zu einem falschen Messergebnis.

Da bei niederenergetischen Röntgenstrahlen, wie z.B. Röntgen-Fluoreszenzstrahlung leichter Elemente, eine genaue Messung der Intensitäten an Luft nicht möglich ist, weil die Röntgenstrahlen von Luftgasen zu stark absorbiert bzw. gestreut werden, können derartige Goniometer nur in einer Vakuumkammer untergebracht werden. Bedingt durch die Druckdifferenz zwischen dem schwankendem Atmosphärendruck und dem Vakuum sind bekannte Vorrichtungen aufwendig und insbesondere mit dicken Wänden ausgelegt, um die Stabilität der Strahlengänge zu gewährleisten.

In einem Röntgenspektrometer bestrahlt eine Röntgenquelle die zu analysierende Probe. Die von der Probe emittierte Röntgenfluoreszenz tritt in die evakuierte Messkammer ein, trifft auf einen Analysatorkristall und wird von diesem auf einen Röntgendetektor reflektiert. Kristall und Detektor werden mittels eines Goniometers so platziert, dass die Bragg-Bedingung für die zu analysierende Wellenlänge erfüllt ist.

Klassische Goniometer beinhalten typischerweise Schritt- oder Servomotoren, die mit entsprechenden Getriebeübersetzungen die Drehachsen des Goniometers antreiben. Da die Strahlengänge eines XRF-Goniometers im Vakuum liegen müssen, ergeben sich für solche klassische Antriebskonzepte zwei grundlegende Möglichkeiten:

### 1. Motoren außerhalb der Vakuumkammer

Hierbei kann das Getriebe innerhalb der Vakuumkammer untergebracht sein. Allerdings ist hierfür wegen der Vakuumbedingungen nur eine kleine Auswahl an Fetten für die Getriebe verfügbar und entstehende Wärme im Getriebe kann schlecht abgeführt werden, was seinerseits zu Störungen vom Aufbau in der Vakuumkammer führt. Das Getriebe kann aber auch -wie beim *Bruker S8 Tiger,* publiziert unter https://www.bruker.com/de/products/x-ray-diffraction-andelemental-analysis/x-ray-fluorescence/s8-tiger/technical-details.html - außerhalb der Vakuumkammer liegen. Nachteilig ist dann jedoch, dass für den Durchtritt der Welle in die Vakuumkammer eine große Öffnung erforderlich ist, die drehbare Teile aufnimmt und gleichzeitig vakuumdicht sein muss. Aufgrund der Druckdifferenz ist mithin eine massive Konstruktion der Getriebehalterung und damit der Wand der Messkammer erforderlich.

### 2. Motoren innerhalb der Vakuumkammer

Es ist jedoch wünschenswert, die Motoren innerhalb der Vakuumkammer anzubringen, um massive Aufbauten für die Vakuumdurchführung zu vermeiden und die Vakuumdichtigkeit zu verbessern. Auch hier ist die Wärmabfuhr durch thermische Strahlung mangelhaft. Eine Kühlung lässt sich nur durch aufwendige Maßnahmen, wie etwa eine Wasserkühlung oder dergleichen erreichen.

### Thermische Verlustleistungen beim statischen Halten einer Position:

Motoren für Goniometer sind üblicherweise als Schrittmotoren ausgelegt, die im Mikroschrittbetrieb angesteuert werden, um die Auflösung zu verbessern. In diesem Modus müssen die Motorphasen permanent in einem bestimmen Verhältnis mit Strom versorgt werden um nicht in den nächsten Vollschritt des Stators zurück zu fallen. Diese Eigenschaft ist unabhängig von der angeschlossenen Getriebeart. Dadurch wird elektrische Leistung in Wärme innerhalb der Vakuumkammer umgesetzt.

Servomotoren müssen ebenfalls permanent mit Strom versorgt werden, um eine nicht ausbalancierte Achse in einer statischen Position zu halten. Das gilt auch für spezielle Direktantriebe, die ohne Getriebe direkt auf die Goniometerachsen einwirken.

Die Verwendung von Piezomotoren bei Goniometern für Röntgendiffraktometer ist bekannt aus der JP 2002311199 A, allerdings nicht für Anwendungen in Verbindung mit einem Vakuumgehäuse für die Messkammer zur Analyse von Röntgenfluoreszenzstrahlung wie bei einem gattungsgemäßen Röntgenspektrometer. In der JP 2002311199 A werden zwei ringförmige Piezomotoren in einer horizontalen Geometrie zum Antrieb zweier koaxialer Achsen beschrieben. Die Piezomotoren sind symmetrisch eingebaut und haben die gleichen Abmessungen.

### Aufgabe der Erfindung

Der vorliegenden Erfindung liegt demgegenüber die Aufgabe zugrunde, ein im Vergleich zum Stand der Technik kompakteres, leichteres und stabileres Röntgenspektrometer mit einem drehbaren Goniometer der eingangs definierten Art zur Analyse von Röntgenfluoreszenzstrahlung bereitzustellen, welches einen möglichst geringen Wärmeeintrag in das Gesamtsystem verursacht. Gleichzeitig sollten die mechanischen Stabilitätsanforderungen an die Messkammer so optimiert werden, dass Kosten und Gewicht reduziert werden.

### Kurze Beschreibung der Erfindung

Diese Aufgabe wird auf ebenso überraschend einfache wie wirkungsvolle Weise sowie mit ohne Weiteres zur Verfügung stehenden technischen Mitteln durch eine Messkammer gemäß Anspruch 1 gelöst.

### Wirkungsweise der Erfindung und weitere Vorteile gegenüber dem Stand der Technik

Die vorliegende Erfindung schlägt also eine Messkammer für ein Röntgen-Goniometer vor, welche eine höhere Stabilität und kompaktere Bauform des Röntgenspektrometers sowie einen geringeren Wärmeeintrag ermöglicht.

Die Verwendung von Piezomotoren in Verbindung mit dem Lagerblock bewirkt insgesamt eine höhere Stabilität und kompaktere Bauform des Röntgenspektrometers. Piezomotoren erzeugen sowohl im Verstellbetrieb wie im Haltebetrieb weniger Wärme als herkömmliche Motoren und sind in der Regel kleiner ausgeführt. Im Haltebetrieb ist insbesondere die erhöhte Reibungskraft zwischen dem Piezomotor und der Gegenfläche am Goniometerarm vorteilhaft. Es ist bei geeigneter Auslegung kein Haltestrom für den Haltebetrieb erforderlich. Der verringerte Wärmeeintrag seinerseits führt zu geringeren Deformationen des Messaufbaus. Die von den Wänden der Messkammer weitgehend entkoppelte Halterung der beiden Goniometerarme erhöht die Stabilität des Messaufbaus ebenfalls, da über das Vakuum auf die Wände wirkende Kräfte die Position des Goniometers nicht unmittelbar beeinflussen wie bei herkömmlichen Vakuumspektrometern, die eine Vakuumdurchführung für die Achsen der Goniometerarme umfassen. Außerdem ist die Messkammer leichter vakuumdicht auszuführen, weil sie sämtliche mechanischen Komponenten des Goniometers enthält.

### Bevorzugte Ausführungsformen der Erfindung

Es ist gemäß der Erfindung, dass die Messkammer eine gegenüber den Seiten- und Deckenwänden dicker ausgelegte, die Eintrittsöffnung umfassende Haltewand aufweist, mit welcher der Lagerblock fest verbunden ist. Dann muss nur eine Wand der Messkammer verwindungssteif ausgeführt und genau bearbeitet werden. Die restlichen Wände sind nicht mehr relevant für den Strahlengang, so dass dünnere Wandstärken und geringere Ansprüche an die Genauigkeit möglich sind. Dies trägt vor allem auch zur Gewichts- und Kostenersparnis bei. Zudem ist der Einfluss der Deformation dieser Haltewand auf den Messaufbau geringer, weil der Lagerblock entlang der Eintrittsrichtung der Röntgenfluoreszenzstrahlung orientiert ist. Verformt sich beispielsweise die Haltewand nach innen, führt dies im nicht zu einer Änderung des Auftreffwinkels auf den Analysatorkristall.

Weitere vorteilhafte Ausführungsformen sind dadurch gekennzeichnet, dass die Antriebsplatte des Goniometerarms für den Detektor und die Antriebsplatte des Goniometerarms für den Analysatorkristall sich auf verschiedenen Seiten des Lagerblocks befinden. Dies ermöglicht eine noch kompaktere Bauweise, insbesondere auch eine Reduktion der Bautiefe sowie ein besseres Kräftegleichgewicht im Betrieb der Anordnung.

Ähnliche Vorteile lassen sich auch bei Ausführungsformen erzielen, bei welchen der Analysatorkristall auf der der Antriebsplatte des Goniometerarms für den Analysatorkristall gegenüberliegenden Seite des Lagerblocks befindlich ist.

Günstig für den Gebrauch kann es auch sein, wenn bei der erfindungsgemäßen Messkammer die Piezomotoren fest mit dem Lagerblock verbunden und derart angeordnet sind, dass sie von der gleichen Seite aus auf die Antriebsplatten der Goniometerarme einwirken können. Bei der Wartung des Goniometers und der Motoren wird dann nur Zugang von einer Seite des Goniometers benötigt.

Besonders bevorzugte Varianten der Erfindung bei einer Klasse von Ausführungsformen zeichnen sich dadurch aus, dass die Goniometerarme und die Antriebsplatten so ausgelegt sind, dass die Piezomotoren bei geöffneter Messkammer ohne Entfernen weiterer Komponenten des Goniometers abgenommen beziehungsweise montiert werden können. Dies erleichtert die Wartung und führt zu Zeit- und Kostenersparnissen. Gegebenenfalls sind die Goniometerarme hierfür in eine Wartungsposition zu fahren.

Eine weitere vorteilhafte Ausführungsform der erfindungsgemäßen Messkammer zeichnet sich dadurch aus, dass die Piezomotoren und der Sensor für einen Encoder zur Erkennung der Drehposition der Goniometerarme getrennt am Lagerblock befestigt sind. Dadurch hat eine Wartung des Piezomotors keinen - jedenfalls keinen negativen - Einfluss auf die Kalibrierung der Winkelmessung.

Besonders bevorzugt ist auch eine Ausführungsform der Erfindung, bei der Ausgleichsgewichte für die Goniometerarme vorgesehen sind, die den Schwerpunkt des Goniometerarms und der Anbauteile auf wenige Millimeter, vorzugsweise auf ca. 2mm, an die jeweilige Drehachse heranbringen. Damit kann der Anpressdruck der Piezomotoren an die Laufbahnen, der für die Haltung einer Position erforderlich ist, minimiert werden, wodurch die Genauigkeit und Gleichmäßigkeit der Bewegung erhöht wird. Eine zusätzliche Transportsicherung des Mechanismus kann entfallen und das Gerät ist beim Kunden sofort einsatzbereit.

Eine weitere vorteilhafte Ausführungsform der Erfindung zeichnet sich dadurch aus, dass die Piezomotoren getriebefrei aufgebaut und mit einer elektronischen Regeleinrichtung zur Positionierung der Goniometerarme ausgestattet sind. Dadurch werden mechanische Verlustleistungen im Getriebe ausgeschlossen, was zu einem noch geringeren Wärmeeintrag führt. Außerdem gibt es keine negativen Auswirkungen von Getriebefehlern, etwaigen Übersetzungsfehlern oder Getriebespiel auf die Positionierung der Anordnung.

Ganz besonders bevorzugt ist eine Klasse von Ausführungsformen der erfindungsgemäßen Messkammer, bei denen die Goniometerarme bzw. der Lagerblock für den Kontakt zu den Piezomotoren Laufbahnen aus einem harten, vorzugsweise einem gehärtetem, Material, insbesondere Metall oder Keramik, umfassen, und dass der Radius für die Laufbahn des Goniometerarms für den Röntgen-Detektor kleiner als der Radius für die Laufbahn des Goniometerarms für den Analysatorkristall ist, wobei das Verhältnis der Radien zwischen 0.25 - 0.75 beträgt. Verschleiß tritt in der Regel am Kunststoff-Kontaktfinger des Piezomotors auf, der üblicherweise weicher ausgelegt ist, insbesondere Kunststoff enthält. Durch die geringere Härte des Kontaktfingers tritt der Verschleiß eher an demselben auf. Da er leichter getauscht werden kann ergibt sich hieraus bei der Wartung Zeit- und Kostenersparnisse.

Weiterhin vorteilhaft ist es, dass bei unterschiedlichen Radien eine optimierte Anpassung der Anforderungen an die Winkelgenauigkeit und die exakt benötigte Winkelgeschwindigkeit erfolgen kann. Im Allgemeinen sollte die Detektoreinheit vorzugsweise doppelt so schnell fahren, benötigt aber eine geringere Winkelgenauigkeit als der Analysatorkristall. Bei gleichem Verstellweg der Piezomotoren wird erfindungsgemäß allein durch die unterschiedlichen Radien eine bessere Genauigkeit erreicht.

Vorteilhafte Weiterbildungen dieser Klasse von Ausführungsformen sind dadurch gekennzeichnet, dass die Laufbahnen in einem bezogen auf die Drehachse der Goniometerarme radial äußeren Bereich auf den Goniometerarmen angeordnet sind. Dadurch wird eine hohe Winkelauflösung der motorischen Antriebe erreicht.

Besonders bevorzugte Varianten dieser Klasse von Ausführungsformen zeichnen sich dadurch aus, dass die Laufbahnen jeweils einen, vorzugsweise einen einzigen, segmentförmigen, insbesondere kreisringsegmentförmigen, Abschnitt aufweisen. Auch diese Maßnahme ermöglicht eine kompaktere Bauweise. Auf Grund der Art des verwendeten Aufbaus der Messkammer kann die Laufbahn auf einen sinnvollen Winkelbereich beschränkt werden. Eine vollständige 360° Drehung der Goniometerarme ist nicht unbedingt erforderlich. Meist ist eine Messung mit dem Detektor in dem Winkelbereich 0 - 180° ausreichend. Der Winkelbereich der Segmente kann demzufolge angepasst werden, wobei der Winkelbereich der Laufbahn für den Analysatorkristall kleiner ausgeführt sein kann als der für den Röntgen-Detektor, da dieser bei einer Winkeländerung des Analysatorkristalls immer den doppelten Winkel zurücklegen muss.

Vorteilhaft kann der Winkelbereich für den Analysatorkristall auf bis zu 90° und der für den Röntgendetektor auf weniger als 180° beschränkt werden.

Eine weitere Klasse von besonders bevorzugten Ausführungsformen der erfindungsgemäßen Messkammer zeichnet sich dadurch aus, dass auf den Goniometerarmen Encoderstreifen zur Ermittlung der genauen aktuellen Winkelposition der Goniometerarme angebracht sind. Diese ermöglichen eine direkte Winkelmessung auf der zu bewegenden Komponente, so dass ein Verschleiß der Antriebe keinen Einfluss auf die Winkelmessung hat. Außerdem entfällt ein störendes Einlaufverhalten durch Aufwärmung, da immer die absolute Position der Goniometerarme ermittelt werden kann Die Encoderstreifen werden vorteilhaft von einer Ausleseeinheit ausgelesen, die jeweils neben dem Piezomotor montiert ist.

Eine besonders einfach zu realisierende Weiterbildung dieser Klasse von Ausführungsformen sieht vor, dass die Encoderstreifen kreisförmig oder kreissegmentförmig gebogen sind. Damit ergibt sich eine optimale Form für Winkelmessung. Vorteilhafterweise sind solche Encoderstreifen auf einem ebenfalls kreisförmig gebogenen Abschnitt eines Goniometerarms, insbesondere an der Stirnseite der Antriebsplatte, angebracht.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
Fig. 1 den schematischen Aufbau eines Röntgenspektrometers mit erfindungsgemäßer Messkammer in Seitenansicht;
Fig. 2 eine schematische Darstellung eines Piezo-Goniometer-Systems einer erfindungsgemäßen Messkammer
   a) in Seitenansicht, gedreht im Vergleich zu Fig. 1,
   b) in Schnittansicht, wobei die Schnittebene von der Eintrittsrichtung des Röntgenstrahls und der Drehachse des Goniometers aufgespannt wird;
Fig. 3 eine schematische räumliche Draufsicht von schräg oben auf einen Goniometerarm einer erfindungsgemäßen Messkammer, hier für den Analysatorkristall;
Fig. 4 eine schematische Seitenansicht des Gesamtaufbaus einer Ausführungsform der erfindungsgemäßen Messkammer für zwei verschiedene Winkellagen der Goniometeranordnung, nämlich
   a) mit flachem Einfallswinkel der Röntgenstrahlung bezüglich der Kristalloberfläche
   b) mit steilem Einfallswinkel der Röntgenstrahlung.

### Grundlegender Aufbau des erfindungsgemäßen Piezo-Goniometers:

- Das Goniometer besteht aus den folgenden Hauptkomponenten:
   ∘ Lagerblock mit Antrieben und Positionssensoren
   ∘ Zwei konzentrische Kugellager für die beiden Drehachsen
   ∘ Drehachse für Kristallwechslereinheit, die folgendermaßen aufgebaut ist:
      ▪ Eine zentrale Achse durch den Lagerblock
      ▪ Auf einer Seite des Lagerblocks befindet sich der Kristallwechsler zur automatischen Auswahl verschiedener Analysatorkristalle. Auf dieser Seite des Lagerblocks befinden sich auch alle anderen optischen Komponenten des Strahlengangs. Die geometrische Drehachse liegt genau in der Ebene der aktiven Kristalloberfläche
      ▪ Auf der anderen Seite des Lagerblocks befindet sich eine Antriebsplatte mit:
      ▪ Laufbahn für den zugehörigen Piezomotor
      ▪ Encoderstreifen, kreisförmig gebogen aufgebracht
      ▪ Ausgleichsgewichte um den Schwerpunkt von Drehachse und bewegten Anbauteilen auf wenige mm (hier ca. 2mm) an die Drehachse heranzubringen
   ∘ Drehachse für die Bewegung der Detektorsysteme. Diese ist wie folgt aufgebaut.
      ▪ Das mechanische Lager ist ringförmig um die Drehachse für die Kristallwechslereinheit angeordnet.
      ▪ Es gibt keine separate Achse durch den Lagerblock. Die bewegte Antriebsplatte für Detektoreinheit, Laufbahn und Encoderstreifen sitzt direkt am Lagerring und trägt ebenfalls Ausgleichsgewichte, um den Schwerpunkt von Drehachse und bewegten Anbauteilen auf wenige mm (hier ca. 3.5mm) an die Drehachse heranzubringen.
- Alle mechanischen Komponenten des Goniometers
   ∘ befinden sich innerhalb der Vakuumkammer (Spektrometerkammer)
   ∘ sind an einem kompakten schmalen Lagerblock befestigt, der an der Strahleintrittsseite mit der Kammer verbunden ist.
- Antriebsart:
   ∘ Piezomotoren (ohne Getriebe) mit Regelschleife zur Positionierung.
   ∘ Positionsüberwachung durch Winkelencoder direkt auf der Drehachse

Vorteilhaft für die Umsetzung der vorliegenden Erfindungsidee ist, dass die Trägerplatten, zumindest größtenteils, Laufbahnen und Encoderbänder des Goniometers als Kreissegmente ausgeführt sind. Durch diese Ausführung lässt sich die Platzanforderung in der Vakuumkammer minimieren. Dabei sind die Kreissegmente der Laufbahnen und Encoder so orientiert, dass die Drehachse im Lagerbock trotz großer Radien möglichst nahe am Eingangskollimator für den Strahleintritt liegt.

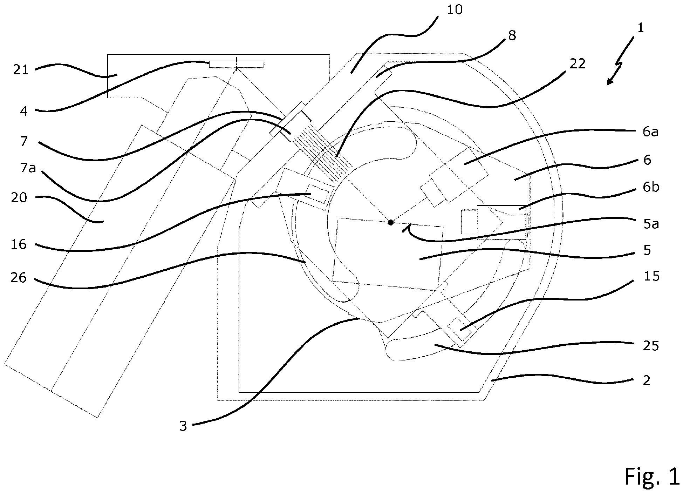

Fig. 1 stellt schematisch den Gesamtaufbau eines **Röntgenspektrometers 1** mit erfindungsgemäßer **Messkammer 2** dar, welche ein **Goniometer 3** umfasst. Das Röntgenspektrometer 1 dient zur Analyse von Röntgenfluoreszenzstrahlung, die von einer mit Röntgenstrahlung bestrahlten, zu untersuchenden **Messprobe 4** ausgeht. Die Messkammer 2 umfasst eine Eintrittsöffnung **7a** zum Eintritt der Röntgenfluoreszenzstrahlung in die Messkammer, einen **ersten Goniometerarm 5** zur Halterung und Justierung eines Analysatorkristalls 5a mit **Kristallwechsler 5',** und einen **zweiten Goniometerarm 6** zur Halterung und Justierung eines **Röntgen-Detektors 6a, 6b,** wobei die Messkammer 2 vakuumdicht ausgestaltet ist und wobei die Eintrittsöffnung 7a für die Röntgenfluoreszenzstrahlung durch ein **Fenster 7** vakuumdicht verschlossen ist.

Das Röntgenspektrometer 1 umfasst eine **Röntgenquelle 20** und eine **Probenkammer 21.** Hinter dem Fenster 7 der Messkammer 2 ist ein **Kollimator 22** angeordnet.

Die erfindungsgemäße Messkammer 2 zeichnet sich dadurch aus, dass sie einen **Lagerblock 8** zur konzentrischen und drehbaren Aufnahme und Halterung der beiden jeweils mittels eines **Piezomotors 15, 16,** der fest mit dem Lagerblock 8 oder einer **Antriebsplatte 9', 9"** des jeweiligen Goniometerarms 5, 6 verbunden ist, mechanisch verstellbaren Goniometerarme 5, 6, sowie sämtliche mechanischen Komponenten des Goniometers 3 enthält.

Das Röntgenspektrometer ist in Fig. 1 senkrecht angeordnet. Dadurch befindet sich die Messprobe 4 in waagrechter Lage, was die Messung von Flüssigkeiten in Probenbechern erleichtert.

Die Messkammer 2 weist eine gegenüber den Seiten- und Deckenwänden dicker ausgelegte, die Eintrittsöffnung umfassende **Haltewand 10** auf, mit weicher der Lagerblock 8 fest verbunden ist (siehe Fig. 1).

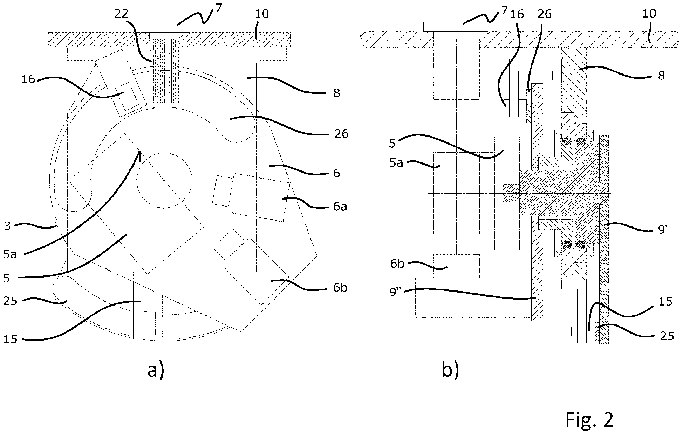

Die Piezomotoren 15, 16 sind fest mit dem Lagerblock 8 verbunden und derart angeordnet, dass sie von der gleichen Seite aus auf die Antriebsplatten 9', 9" der Goniometerarme 5, 6 einwirken können. In der gezeigten Ausführung umfasst der erste Goniometerarm hierbei alle in Zusammenhang mit dem Analysatorkristall beweglichen Teile und tritt insbesondere durch die Lagerung in dem Lagerblock hindurch. Der zweite Goniometerarm umfasst hingegen die mit den Detektoren gemeinsam bewegten Teile. In der gezeigten Ausführung wird dieser Arm durch ein Kugellager in dem Lagerblock gehalten (siehe Figur 2b). Außerdem sind die Piezomotoren 15, 16 getriebefrei aufgebaut und mit einer elektronischen Regeleinrichtung zur Positionierung der Goniometerarme 5, 6 ausgestattet. Die Goniometerarme 5, 6 und die Antriebsplatten 9', 9" sind so ausgelegt, dass die Piezomotoren 15, 16 bei geöffneter Messkammer 2 ohne Entfernen weiterer Komponenten des Goniometers 3 abgenommen beziehungsweise montiert werden können. Um die Überdeckung des Piezomotors 15 für den Analysatorkristall durch die Antriebsplatte 9" zu verhindern, sind die Goniometerarme hierfür in eine Wartungsposition zu fahren.

Die Goniometerarme 5, 6 beziehungsweise der Lagerblock 8 umfassen für den Kontakt zu den Piezomotoren 15, 16 **Laufbahnen 25, 26** aus einem harten, vorzugsweise einem gehärtetem, Material, insbesondere Metall oder Keramik. Der Radius für die Laufbahn 26 des zweiten Goniometerarms 6 ist kleiner als der Radius für die Laufbahn 25 des ersten Goniometerarms 5, wobei das Verhältnis der beiden Radien zwischen 0,25 und 0,75 beträgt. Die Laufbahnen 25, 26 sind in einem bezogen auf die Drehachse der Goniometerarme 5, 6 radial äußeren Bereich auf den Goniometerarmen 5, 6 angeordnet und weisen jeweils einen, vorzugsweise einen einzigen, segmentförmigen, insbesondere kreisringsegmentförmigen, Abschnitt auf.

Die Figuren 2a und 2b veranschaulichen schematisch ein Piezo-Goniometer-System der erfindungsgemäßen Messkammer. Fig. 2a zeigt eine Seitenansicht des Goniometers ohne Messkammer, welches im Vergleich zu Fig. 1 gedreht dargestellt ist, so dass die Strahlung hier senkrecht von oben einfällt. Fig. 2b zeigt einen Schnitt durch das Goniometer zur Verdeutlichung der räumlichen Anordnung der Goniometerarme, der Piezomotoren, Laufbahnen und Antriebsplatten.

Der Analysatorkristall 5a und seine Antriebsplatte 9' sind auf gegenüberliegenden Seiten des Lagerblocks 8 angeordnet. Die Antriebsplatte 9' des ersten Goniometerarms 5 und die Antriebsplatte 9" des zweiten Goniometerarms 6 sind ebenfalls auf gegenüberliegenden Seiten des Lagerblocks 8 angeordnet (siehe auch Fig. 2b).

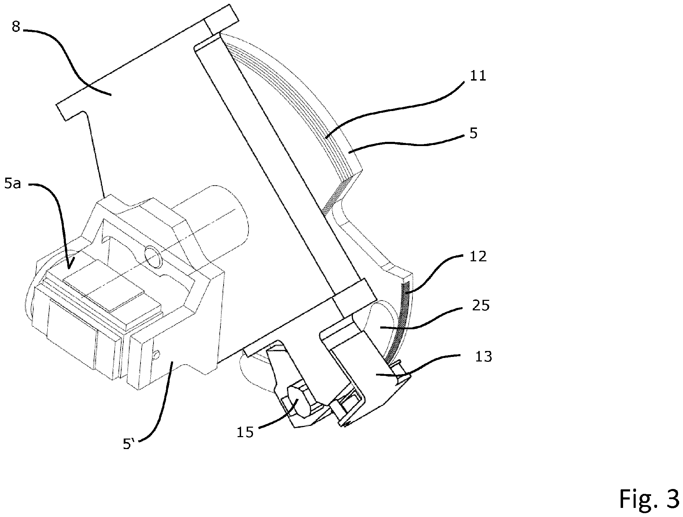

In Fig. 3 sind der Lagerblock 8 (mit dicken Linien) und der Goniometerarm 5 für die Kristallwechslereinheit im Detail gezeigt. Die sich drehenden Komponenten sind mit dünnen Linien dargestellt. Vor dem Lagerblock 8 befindet sich der Kristallwechsler 5', hinter dem Lagerblock 8 die Antriebsplatte mit dem Encoderband 12, der Laufbahn 25 und den Gegengewichten 11. Am statisch an der Kammerwand 10 fixierten Lagerblock 8 sind die Motorhalterung, der Piezomotor 15 und die Ausleseeinheit 13 des Encoders befestigt. Die Drehachse ist im Lagerblock 8 gelagert und tritt durch diesen hindurch. Die Antriebsplatte mit Encoderstreifen 12, Laufbahn 25 desAntriebs 15 und Ausgleichsgewichten 11 ist fest mit der Drehachse verbunden und liegt hinter dem Lagerblock 8. Der Kristallwechsler 5' ist ebenfalls fest mit der Drehachse verbunden und liegt vor dem Lagerblock 8.

Für die Goniometerarme 5, 6 sind **Ausgleichsgewichte 11** vorgesehen, die den Schwerpunkt von Drehachse und bewegten Anbauteilen auf wenige Millimeter, vorzugsweise auf ca. 2mm, an die Drehachse heranbringen (siehe Fig. 3).

Auf den Goniometerarmen 5, 6 sind kreisförmige oder kreissegmentförmig gebogene **Encoderstreifen 12** zur Ermittlung der genauen aktuellen Winkelposition der Goniometerarme 5, 6 angebracht (siehe Fig. 3). Die Piezomotoren 15, 16 und die Sensoren für die Encoder sind getrennt am Lagerblock 8 befestigt. Für die Encoder sind elektronische **Ausleseeinheiten 13** vorgesehen.

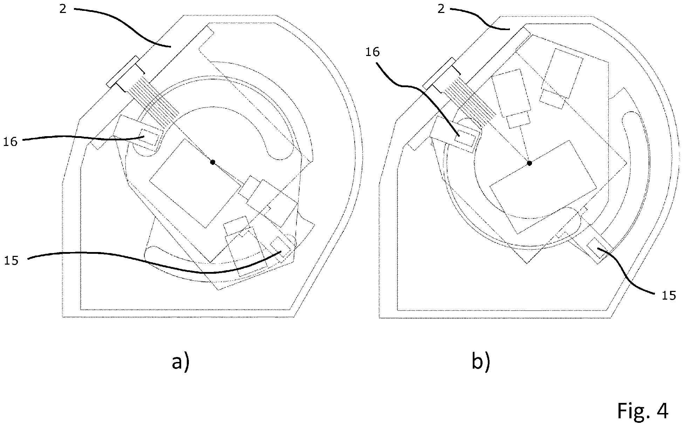

Die Figuren 4a und 4b schließlich zeigen in Seitenansicht das erfindungsgemäße Piezo-Goniometer in zwei Messpositionen, nämlich Fig. 4a mit flachem Einfallswinkel der Röntgenstrahlung bezüglich der Kristalloberfläche und Fig. 4b mit steilem Einfallswinkel. In den Figuren ist gut zu erkennen, dass der Piezomotor 15 für den Kristallwechsler 5' bezüglich der gemeinsamen Drehachse weiter außen liegt als der Piezomotor 16 für den Detektor 6a. Bei gleicher Schrittzahl wird dadurch für den Detektor 6a ein größerer Winkelbereich überstrichen beziehungsweise für den Analysatorkristall 5a eine höhere Winkelauflösung erreicht. Auch sind die damit zusammenhängenden als Kreisringsegmente ausgeführten Laufbahnen 25,26 für beide Piezomotoren 15, 16 zu erkennen. Beide sind für einen begrenzten Winkelbereich ausgelegt wodurch sich das Röntgenspektrometer 1 kompakter auslegen lässt.

Wie in den Figuren dargestellt werden vorteilhaft auch zwei Detektoren 6a, 6b in dem Aufbau verwendet. Hierdurch kann abhängig von der Energie der zu messenden Röntgenstrahlung, der optimale Detektor verwendet werden.

Der neue, erfindungsgemäße Ansatz für das Goniometer mit Piezoantrieben weist die folgenden Vorteile auf:
- Der kompakte Lagerblock des Goniometers stützt sich innerhalb der Vakuumkammer nur auf die Seitenwand der Spektrometerkammer, jener Wand an der auch die Probenkammer angeflanscht ist. Alle restlichen Wände müssen keinen so genauen geometrischen Bezug zum Strahlengang einhalten und können deshalb dünner und gegenüber Druckdifferenzen weniger starr konzipiert werden. Das Konzept erlaubt eine deutliche Gewichtsreduktion der Spektrometerkammer.
- In dem Konzept sind die Piezomotoren mit kurzen Abständen direkt an den Lagerblock der Goniometerlagerung fixiert
   ∘ Kurze Abstände erlauben trotz Vakuum gute Wärmeableitung über die Halterung.
   ∘ Gute Steifigkeit bei geringem Gewicht.
- Im Vergleich zum oben zitierten BRUKER S8 TIGER mit Schneckengetriebe ist der Wärmeeintrag deutlich geringer, da kein mechanisches Getriebe notwendig ist.

Das erfindungsgemäße mechanische Design bietet aber noch einige weitere Vorteile:
- Optimierte Arbeitsradien der Piezomotoren: Die Achse mit dem Kristallwechsler muss nur die halbe Winkelstrecke gegenüber der Achse mit der Detektoreinheit verfahren. Gleichzeitig müssen die Kristalle mit einer besseren Winkelauflösung bewegt werden, was im neuen Konzept dadurch unterstützt wird, dass der Arbeitsradius für denKristallwechslerantrieb deutlich größer ist als für den Detektorantrieb (aber nicht exakt Verhältnis 1:2). Dieser Ansatz ist nicht leicht zu verwirklichen: Im Gegensatz zu den Anforderungen an die Arbeitsradien ist die Detektoreinheit weiter entfernt von der Drehachse, während der Kristallwechsler mittig nahe der Drehachse platziert ist.
- Bei geöffneter Messkammer können beide Piezomotoren leicht von der Vorderseite des Goniometerblocks abgenommen werden, ohne dass die gesamte Einheit aus der Messkammer ausgebaut werden muss. Das erleichtert die regelmäßige Wartungsarbeit enorm.

Haupt-Anwendungsgebiet der erfindungsgemäßen Anordnung ist die Röntgenfluoreszenzanalyse.

### Bezugszeichenliste:

- 1: Röntgenspektrometer
- 2: Messkammer
- 3: Goniometer
- 4: Messprobe
- 5: erster Goniometerarm
- 5a: Analysatorkristall
- 5': Kristallwechsler
- 6: zweiter Goniometerarm
- 7: Fenster
- 7a: Eintrittsöffnung
- 8: Lagerblock
- 9': Antriebsplatte des ersten Goniometerarms
- 9": Antriebsplatte des zweiten Goniometerarms
- 10: Haltewand
- 11: Ausgleichsgewichte
- 12: Encoderstreifen
- 13: Ausleseeinheit für den Encoder
- 15: Piezomotor für den Kristallwechsler
- 16: Piezomotor für die Detektoren
- 20: Röntgenquelle
- 21: Probenkammer
- 22: Kollimator
- 25: Laufbahn des ersten Goniometerarms
- 26: Laufbahn des zweiten Goniometerarms

## Patentansprüche

1. Messkammer (2) zur Verwendung in einem Röntgenspektrometer (1) mit einem Goniometer (3) zur Analyse von Röntgenfluoreszenzstrahlung, die von einer mit Röntgenstrahlung bestrahlten, zu untersuchenden Messprobe (4) ausgeht, umfassend
eine Eintrittsöffnung zum Eintritt der Röntgenfluoreszenzstrahlung in die Messkammer (2),
einen Analysatorkristall (5a) sowie einen ersten Goniometerarm (5) zur Halterung und Justierung des Analysatorkristalls (5a), und
einen Röntgen-Detektor (6a, 6b) sowie einen zweiten Goniometerarm (6) zur Halterung und Justierung des Röntgen-Detektors (6a, 6b),
wobei die Messkammer (2) vakuumdicht ausgestaltet ist und wobei die Eintrittsöffnung für die Röntgenfluoreszenzstrahlung durch ein Fenster (7) vakuumdicht verschlossen ist,
**dadurch gekennzeichnet,**
**dass** die Messkammer (2) einen Lagerblock (8) zur konzentrischen und drehbaren Aufnahme und Halterung der beiden Goniometerarme (5, 6) enthält, welche jeweils mittels eines Piezomotors (15, 16), der fest mit dem Lagerblock (8) oder einer Antriebsplatte (9', 9") des jeweiligen Goniometerarms (5, 6) verbunden ist, mechanisch verstellbar sind;
**dass** die Messkammer (2) sämtliche mechanischen Komponenten des Goniometers (3) enthält; und dass die Messkammer (2) eine gegenüber den Seiten- und Deckenwänden dicker ausgelegte, die Eintrittsöffnung umfassende Haltewand (10) aufweist, mit welcher der Lagerblock (8) fest verbunden ist.

2. Messkammer nach Anspruch 1, **dadurch gekennzeichnet,**
**dass** die Antriebsplatte (9") des zweiten Goniometerarms (6) und die Antriebsplatte (9') des ersten Goniometerarms (5) auf verschiedenen Seiten des Lagerblocks (8) angeordnet sind.

3. Messkammer nach einem der vorhergehenden Ansprüche, **dadurch gekennzeichnet, dass** der Analysatorkristall (5a) auf der der Antriebsplatte (9') des ersten Goniometerarms (5) gegenüberliegenden Seite des Lagerblocks (8) angeordnet ist.

4. Messkammer nach einem der vorhergehenden Ansprüche, **dadurch gekennzeichnet, dass** die Piezomotoren (15, 16) fest mit dem Lagerblock (8) verbunden und derart angeordnet sind, dass sie von der gleichen Seite bezüglich der Antriebsplatten (9', 9") aus auf die Antriebsplatten (9', 9") der Goniometerarme (5, 6) einwirken können.

5. Messkammer nach einem der vorhergehenden Ansprüche, **dadurch gekennzeichnet, dass** die Goniometerarme (5, 6) und die Antriebsplatten (9', 9") so ausgelegt sind, dass die Piezomotoren (15, 16) bei geöffneter Messkammer (2) ohne Entfernen weiterer Komponenten des Goniometers (3) abgenommen beziehungsweise montiert werden können.

6. Messkammer nach einem der vorhergehenden Ansprüche, **dadurch gekennzeichnet, dass** Ausgleichsgewichte (11) für die Goniometerarme (5, 6) vorgesehen sind, die den Schwerpunkt des Goniometerarms (5, 6) und der bewegten Anbauteilen auf 2mm an die jeweilige Drehachse heranbringen.

7. Messkammer nach einem der vorhergehenden Ansprüche, **dadurch gekennzeichnet, dass** die Piezomotoren (15, 16) getriebefrei aufgebaut und mit einer elektronischen Regeleinrichtung zur Positionierung der Goniometerarme (5, 6) ausgestattet sind.

8. Messkammer nach einem der vorhergehenden Ansprüche, **dadurch gekennzeichnet, dass** die Goniometerarme (5, 6) beziehungsweise der Lagerblock (8) für den Kontakt zu den Piezomotoren (15, 16) Laufbahnen (25, 26) aus einem gehärteten Material, insbesondere Metall oder Keramik, umfassen, und dass der Radius für die Laufbahn (26) des zweiten Goniometerarms (6) kleiner als der Radius für die Laufbahn (25) des ersten Goniometerarms (5) ist, wobei das Verhältnis der beiden Radien zwischen 0,25 und 0,75 beträgt.

9. Messkammer nach Anspruch 8, **dadurch gekennzeichnet, dass** die Laufbahnen (25, 26) in einem bezogen auf die Drehachse der Goniometerarme (5, 6) radial äußeren Bereich auf den Goniometerarmen (5, 6) angeordnet sind.

10. Messkammer nach Anspruch 8 oder 9, **dadurch gekennzeichnet, dass** die Laufbahnen (25, 26) jeweils einen, vorzugsweise einen einzigen, segmentförmigen, insbesondere kreisringsegmentförmigen, Abschnitt aufweisen.

11. Messkammer nach Anspruch 10, **dadurch gekennzeichnet, dass** der Winkelbereich für den Analysatorkristall auf bis zu 90° und der Winkelbereich für den Röntgendetektor auf weniger als 180° beschränkt ist.

12. Messkammer nach einem der vorhergehenden Ansprüche, **dadurch gekennzeichnet, dass** auf den Goniometerarmen (5, 6) Encoderstreifen (12) zur Ermittlung der genauen aktuellen Winkelposition der Goniometerarme (5, 6) angebracht sind.

13. Messkammer nach Anspruch 12, **dadurch gekennzeichnet, dass** die Encoderstreifen (12) kreisförmig oder kreissegmentförmig gebogen sind.

14. Messkammer nach Anspruch 12 oder 13, **dadurch gekennzeichnet, dass** die Messkammer einen Sensor für den Encoder umfasst und die Piezomotoren (15, 16) und der Sensor für den Encoder getrennt am Lagerblock (8) befestigt sind.

## Claims

1. A measurement chamber (2) for use in an x-ray spectrometer (1) comprising a goniometer (3) for analyzing x-ray fluorescence radiation emanating from a measuring sample (4) to be examined that is irradiated by x-ray radiation, comprising
an entrance opening for the entry of x-ray fluorescence radiation into the measurement chamber (2),
an analyzer crystal (5a) and a first goniometer arm (5) for holding and adjusting the analyzer crystal (5a), and
an x-ray detector (6a, 6b) and a second goniometer arm (6) for holding and adjusting the x-ray detector (6a, 6b),
wherein the measurement chamber (2) has a vacuum-tight configuration and wherein the entrance opening for the x-ray fluorescence radiation is sealed in a vacuum-tight manner by way of a window (7), **characterized in that**
the measurement chamber (2) contains a bearing block (8) for receiving and holding both goniometer arms (5, 6) in a concentric and rotatable manner, wherein the goniometer arms (5, 6) are each mechanically adjustable by means of a piezo-motor (15, 16), which is securely connected to the bearing block (8) or a drive plate (9', 9") of the respective goniometer arm (5, 6),
the measurement chamber (2) contains all mechanical components of the goniometer (3);
and that the measurement chamber (2) has a holding wall (10) that is designed to be thicker in relation to the side and cover walls and that comprises the entrance opening, the bearing block (8) being securely connected to said holding wall.

2. The measurement chamber as claimed in claim 1, **characterized in that** the drive plate (9") of the second goniometer arm (6) and the drive plate (9') of the first goniometer arm (5) are arranged on different sides of the bearing block (8).

3. The measurement chamber as claimed in any one of the preceding claims, **characterized in that** the analyzer crystal (5a) is arranged on the side of the bearing block (8) that lies opposite to the drive plate (9') of the first goniometer arm (5).

4. The measurement chamber as claimed in any one of the preceding claims, **characterized in that** the piezo-motors (15, 16) are securely connected to the bearing block (8) and arranged in such a way that they may act on the drive plates (9', 9") of the goniometer arms (5, 6) from the same side in relation to the drive plates (9', 9").

5. The measurement chamber as claimed in any one of the preceding claims, **characterized in that** the goniometer arms (5, 6) and the drive plates (9', 9") are designed in such a way that, when the measurement chamber (2) is open, the piezo-motors (15, 16) can be removed or assembled without the removal of further components of the goniometer (3).

6. The measurement chamber as claimed in any one of the preceding claims, **characterized in that** balancing weights (11) for the goniometer arms (5, 6) are present, said balancing weights bringing the center of gravity of the goniometer arm (5, 6) and of the moving attachments up to 2 mm from the respective axis of rotation.

7. The measurement chamber as claimed in any one of the preceding claims, **characterized in that** the piezo-motors (15, 16) have a gearing-mechanism-free design and are equipped with an electronic regulating device for positioning the goniometer arms (5, 6).

8. The measurement chamber as claimed in any one of the preceding claims, **characterized in that** the goniometer arms (5, 6) or the bearing block (8) comprise tracks (25, 26) made of a hardened material, in particular metal or ceramics, for the contact to the piezo-motors (15, 16), and that the radius for the track (26) of the second goniometer arm (6) is smaller than the radius for the track (25) of the first goniometer arm (5), wherein the ratio of the two radii lies between 0.25 and 0.75.

9. The measurement chamber as claimed in claim 8, **characterized in that** the tracks (25, 26) are arranged on the goniometer arms (5, 6) in a radially outer region in relation to the axis of rotation of the goniometer arms (5, 6).

10. The measurement chamber as claimed in claim 8 or 9, **characterized in that** the tracks (25, 26) each have one, preferably only one, segment-shaped, in particular annular-segment-shaped section.

11. The measurement chamber as claimed in claim 10, **characterized in that** the angular range for the analyzer crystal is restricted up to 90° and the angular range for the x-ray detector is restricted to less than 180°.

12. The measurement chamber as claimed in anyone of the preceding claims, **characterized in that** encoder strips (12) for ascertaining the exact current angular position of the goniometer arms (5, 6) are attached to the goniometer arms (5, 6).

13. The measurement chamber as claimed in claim 12, **characterized in that** the encoder strips (12) are bent in a circular or circular-segment-shaped manner.

14. The measurement chamber as claimed in claim 12 or 13, **characterized in that** the measurement chamber comprises a sensor for the encoder and the piezo-motors (15, 16) and the sensor for the encoder are fastened separately to the bearing block (8).

## Revendications

1. Chambre de mesure (2) destinée à être utilisée dans un spectromètre à rayons X (1) doté d'un goniomètre (3) pour analyser le rayonnement de fluorescence X émanant d'un échantillon (4) à analyser irradié par des rayons X, comprenant
une ouverture d'entrée pour l'entrée du rayonnement de fluorescence X dans la chambre de mesure (2),
un cristal d'analyseur (5a) ainsi qu'un premier bras de goniomètre (5) pour maintenir et ajuster le cristal d'analyseur (5a), et
un détecteur de rayons X (6a, 6b) ainsi qu'un deuxième bras de goniomètre (6) pour maintenir et ajuster le détecteur de rayons X (6a, 6b),
la chambre de mesure (2) étant conçue étanche au vide et l'ouverture d'entrée pour le rayonnement de fluorescence X étant fermée de manière étanche au vide par une fenêtre (7),
**caractérisée en ce**
**que** la chambre de mesure (2) contient un bloc de montage (8) pour recevoir et maintenir de manière concentrique et rotative les deux bras de goniomètre (5, 6), qui sont chacun réglable mécaniquement au moyen d'un moteur piézoélectrique (15, 16) qui est relié de manière fixe au bloc de montage (8) ou à une plaque d'entraînement (9', 9") du bras de goniomètre respectif (5, 6) ;
**que** la chambre de mesure (2) contient tous les composants mécaniques du goniomètre (3) ;
et **que** la chambre de mesure (2) présente une paroi de support (10) qui est plus épaisse que les parois latérales et supérieure, qui comprend l'ouverture d'entrée et à laquelle le bloc de montage (8) est relié de manière fixe.

2. Chambre de mesure selon la revendication 1, **caractérisée en ce que** la plaque d'entraînement (9") du deuxième bras de goniomètre (6) et la plaque d'entraînement (9') du premier bras de goniomètre (5) sont disposées sur des côtés différents du bloc de montage (8).

3. Chambre de mesure selon l'une des revendications précédentes, **caractérisée en ce que** le cristal d'analyseur (5a) est disposé sur le côté du bloc de montage (8) opposé à la plaque d'entraînement (9') du premier bras de goniomètre (5).

4. Chambre de mesure selon l'une des revendications précédentes, **caractérisée en ce que** les moteurs piézoélectriques (15, 16) sont reliés de manière fixe au bloc de montage (8) et disposés de manière à pouvoir agir sur les plaques d'entraînement (9', 9") des bras de goniomètre (5, 6) à partir du même côté par rapport aux plaques d'entraînement (9', 9").

5. Chambre de mesure selon l'une des revendications précédentes, **caractérisée en ce que** les bras de goniomètre (5, 6) et les plaques d'entraînement (9', 9") sont conçus de telle sorte que les moteurs piézoélectriques (15, 16) peuvent être retirés ou montés sans enlever d'autres composants du goniomètre (3) lorsque la chambre de mesure (2) est ouverte.

6. Chambre de mesure selon l'une des revendications précédentes, **caractérisée en ce que** des poids d'équilibrage (11) sont prévus pour les bras de goniomètre (5, 6), qui rapprochent le centre de gravité du bras de goniomètre (5, 6) et des éléments rapportés mobiles à 2 mm de l'axe de rotation respectif.

7. Chambre de mesure selon l'une des revendications précédentes, **caractérisée en ce que** les moteurs piézoélectriques (15, 16) sont construits sans réducteur et équipés d'un dispositif de régulation électronique pour le positionnement des bras de goniomètre (5, 6).

8. Chambre de mesure selon l'une des revendications précédentes, **caractérisée en ce que** les bras de goniomètre (5, 6) et le bloc de montage (8) comprennent, pour le contact avec les moteurs piézoélectriques (15, 16), des chemins de roulement (25, 26) en matériau durci, en particulier en métal ou en céramique, et que le rayon du chemin de roulement (26) du deuxième bras de goniomètre (6) est inférieur au rayon du chemin de roulement (25) du premier bras de goniomètre (5), le rapport des deux rayons étant compris entre 0,25 et 0,75.

9. Chambre de mesure selon la revendication 8, **caractérisée en ce que** les chemins de roulement (25, 26) sont disposés sur les bras de goniomètre (5, 6) dans une zone radialement extérieure par rapport à l'axe de rotation des bras de goniomètre (5, 6).

10. Chambre de mesure selon la revendication 8 ou 9, **caractérisée en ce que** les chemins de roulement (25, 26) présentent chacun une partie, de préférence une seule partie, en forme de segment, en particulier en forme de segment d'anneau de cercle.

11. Chambre de mesure selon la revendication 10, **caractérisée en ce que** la plage angulaire du cristal d'analyseur est limitée à 90° et la plage angulaire du détecteur de rayons X à moins de 180°.

12. Chambre de mesure selon l'une des revendications précédentes, **caractérisée en ce que** des bandes de codage (12) sont appliquées sur les bras de goniomètre (5, 6) pour déterminer la position angulaire actuelle exacte des bras de goniomètre (5, 6).

13. Chambre de mesure selon la revendication 12, **caractérisée en ce que** les bandes de codage (12) sont pliées en forme de cercle ou de segment de cercle.

14. Chambre de mesure selon la revendication 12 ou 13, **caractérisée en ce que** la chambre de mesure comprend un capteur pour le codeur et les moteurs piézoélectriques (15, 16) et le capteur pour le codeur sont fixés séparément sur le bloc de montage (8).
